# EUROPEAN PATENT SPECIFICATION

(11) **EP 3 530 879 B1**
(45) Date of publication and mention of the grant of the patent: **09.09.2020**
(21) Application number: 16867388.7
(22) Date of filing: 29.12.2016
(51) Int. Cl.: F01B 9/02, F02B 75/32, F16H 21/22, F16H 21/44

(54) **TWO-SLIDER CRANK MECHANISM**
DOPPELSCHIEBERWELLENMECHANIMSUS
MÉCANISME À MANIVELLE ET DEUX COULISSEAUX

(30) Priority: 21.10.2016 RU 2016141456
(43) Date of publication of application: 28.08.2019
(73) Proprietor: Riyanov, Andrey Valerevich, G. Rostov-na-Donu 344113 (RU)
(72) Inventor: Riyanov, Andrey Valerevich, G. Rostov-na-Donu 344113 (RU)
(74) Representative: Conti, Marco
(86) International application number: PCT/RU2016/000943
(87) International publication number: WO 2017/184019

(56) References cited:
- WO-A1-2014/009745
- DE-A1- 3 930 263
- FR-A5- 2 171 708
- US-A- 5 025 759

## Description

### Field of the Invention

The invention relates to mechanical engineering industry, in particular to converters of slider reciprocating movement into crank revolution, and it will find an application in different arts, in particular, in engine manufacture. Specifically, the claimed invention relates to two-slider crank mechanism.

### Background

The prior art discloses slider-crank mechanism consisting of the following components in series: slider, connecting rod and crank. Disadvantage of this mechanism is that a crank makes one-half revolution, i.e. it rotates 180 degree about its axis per one slider stroke to one side.

The prior art discloses engine operation method according to Yarimov mechanical cycle and Yarimov engine (see patent RU2249709C2, IPC: F02B75/32, 33/22, 25/12; application was published on 10.09.2004). The invention relates to power engineering and it can be applied in internal-combustion engines, heat engines and also in power plants converting translational movement into rotational movement. The technical result is efficiency improvement.

According to the invention, the Yarimov engine comprises at least two cylinders with pistons inside, which are kinematically connected to a crank by means of connecting rods. The first cylinder has eccentric slider-crank mechanism, and the second one - central slider-crank mechanism. The first cylinder mechanism has absolute energy parameter which exceeds the second cylinder mechanism's parameter. The cylinders are interconnected by means of closable bypass channel.

The significant and main advantage of the Yarimov engine is high output torque per each complete revolution of 360 degree compared to existing ones.

The disadvantage of this Yarimov patented knowledge is its structural complexity.

### Disclosure of the Invention

The task, which is to be solved by the claimed invention, is increasing of crank revolutions relative to quantity of strokes of the slider uttermost in the sequence.

The technical result of the present invention is ensuring a complete revolution of the crank per one stroke of the slider uttermost in the sequence to one side.

The above technical result is achieved due to the fact that the two-slider crank mechanism with a segment contains a crank connected with the first slider by the first connecting rod. Additionally, the mechanism contains the second slider which guide is arranged at an angle to the first slider guide, the second connecting rod connected with the first slider at one end and with the second slider at the other end, at that, the second connecting rod length equals to amount of crank double length and a distance between the connection point of the second connecting rod and the first slider at the initial phase of its movement, measured in the direction of the first slider movement, and longitudinal axis of the second slider.

New combination of segments and their location results in a new technical property of the subject matter - crank complete revolution per one stroke of the slider uttermost in the sequence.

Considered features are sufficient to achieve the claimed technical result.

The mechanism contains a crank, the first connecting rod connected with the crank at one end, the first slider connected to the other end of the first connecting rod, the second connecting rod connected with the the first slider at one end, and the second slider connected to the other end of the second connecting rod.

Slider guides are arranged at an angle. The second connecting rod length equals to amount of crank double length and a distance between the connection point of the second connecting rod and the first slider at the initial phase of its movement, measured in the direction of the first slider movement, and longitudinal axis of the second slider.

Thus, it is achieved an increase of crank revolutions relative to quantity of strokes of the slider uttermost in the sequence.

### Brief description of the drawings

Fig. 1.1 - 1.5 represent kinematic configuration of the two-slider crank mechanism in case when the first connecting rod 4 of the two-slider crank mechanism does not intersect longitudinal axis of the second slider 1 uttermost in the sequence;
Fig. 1.1 represents the initial stage of movement - the first connecting rod 4 does not intersect longitudinal axis of the second slider 1;
Fig. 1.2 represents the second stage of movement - crank one-half revolution;
Fig. 1.3 represents the third stage of movement - crank complete revolution, full stroke of the second slider 1 to one side;
Fig. 1.4 represents the fourth stage of movement - crank one and a half revolution;
Fig. 1.5 represents the last stage of movement - the second slider 1 has completed movement cycle, the crank has made two complete revolutions to one side;
Fig. 2.1 - 2.5 represent kinematic configuration of the two-slider crank mechanism in case when the first connecting rod 4 of the two-slider crank mechanism intersects longitudinal axis of the second slider 1 uttermost in the sequence;

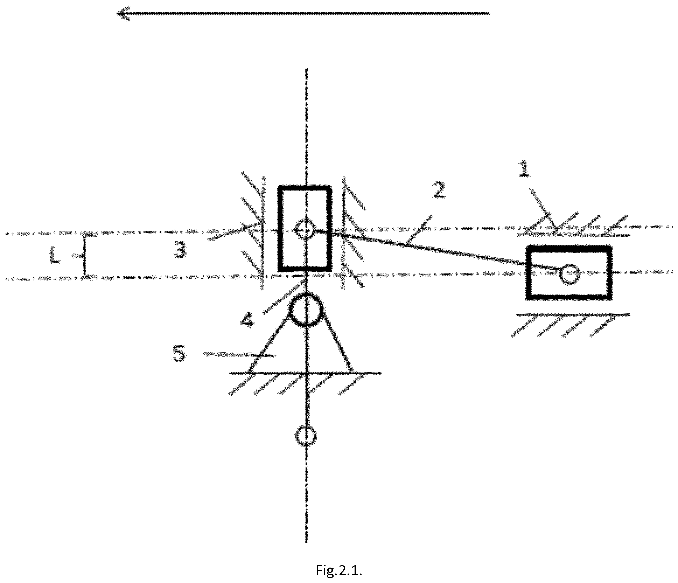

Fig. 2.1 represents the initial stage of movement - the first connecting rod 4 intersects longitudinal axis of the second slider 1;

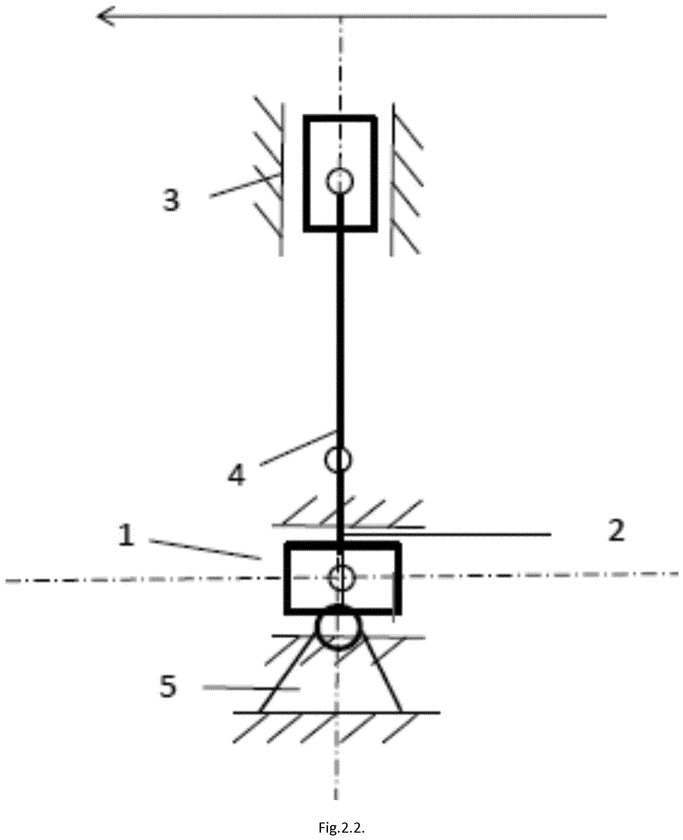

Fig. 2.2 represents the second stage of movement - crank one-half revolution;

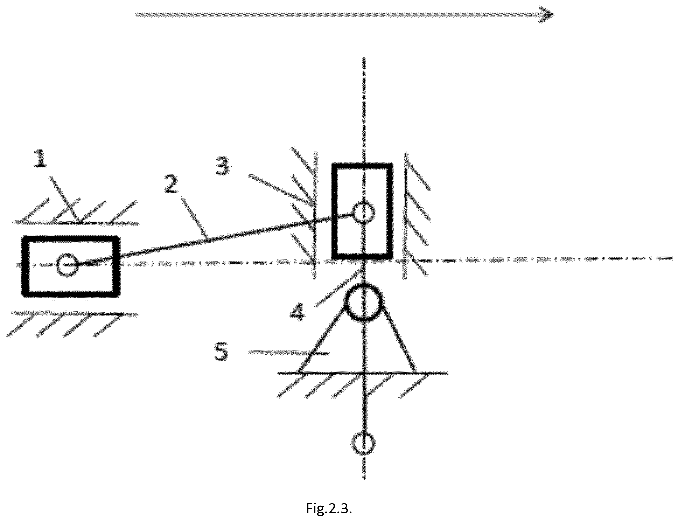

Fig. 2.3 represents the third stage of movement - crank complete revolution, full stroke of the second slider 1 to one side;

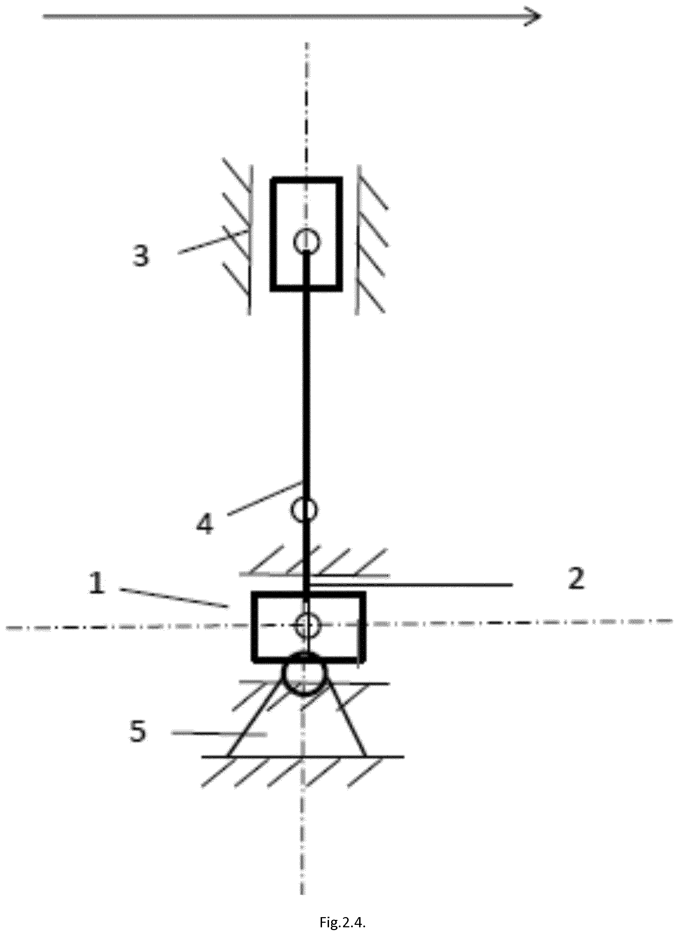

Fig. 2.4 represents the fourth stage of movement - crank one and a half revolution;

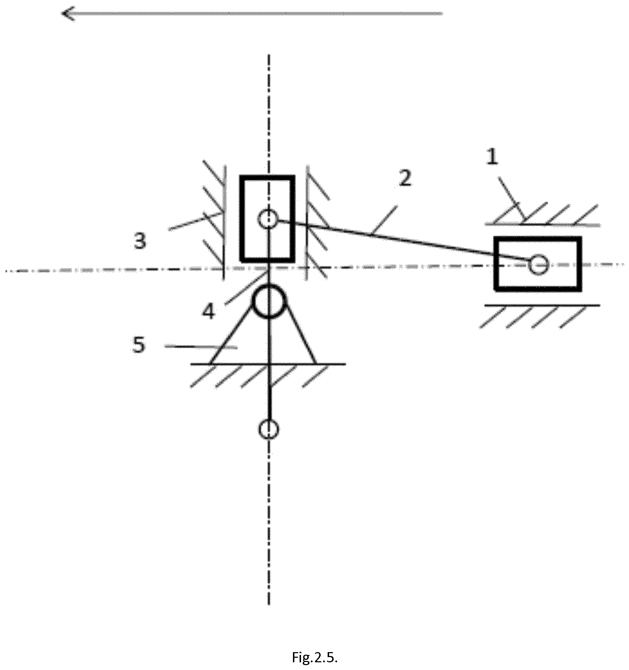

Fig. 2.5 represents the last stage of movement - the second slider 1 has completed movement cycle, the crank has made two complete revolutions to one side.

### Embodiment of the Invention

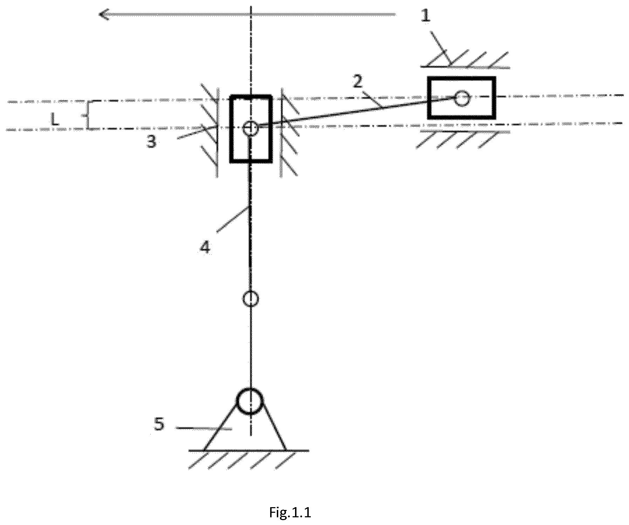

The claimed two-slider crank mechanism with a segment (Fig. 1.1, 2.1) contains the second slider 1, the second connecting rod 2, the first slider 3, which guide is arranged at an angle to the second slider 1 guide, the first connecting rod 4 and crank 5.

Guides of the first slider 3 and the second slider 1 are arranged at an angle. The second connecting rod 2 length equals to amount of the crank 5 double length and a distance between the connection point of the second connecting rod 2 and the first slider 3 at the initial phase of its movement, measured in the direction of the first slider 3 movement, and longitudinal axis of the second slider 1 (denoted by L in Fig. 1.1 and Fig. 2.1).

The mechanism operates as follows.

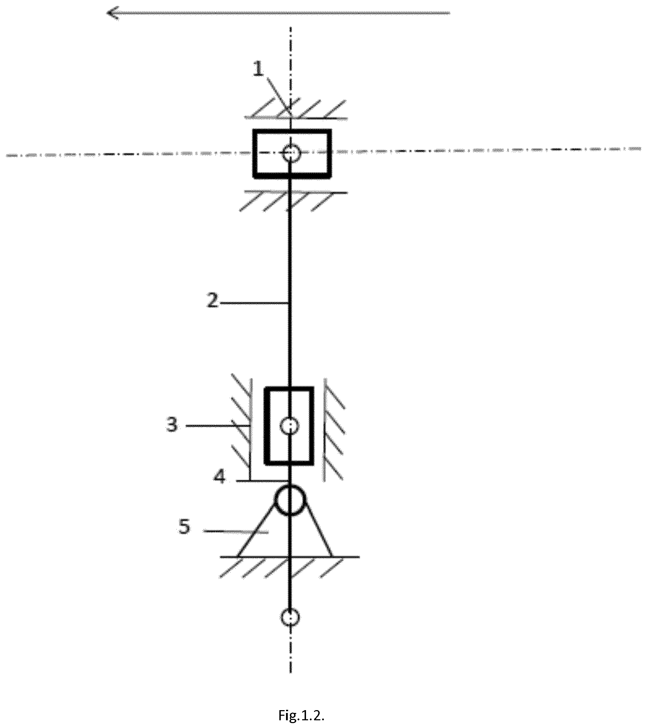

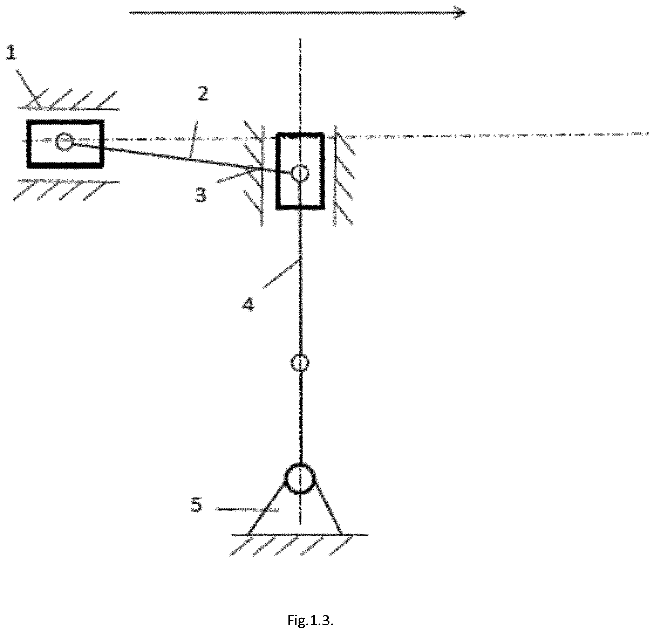

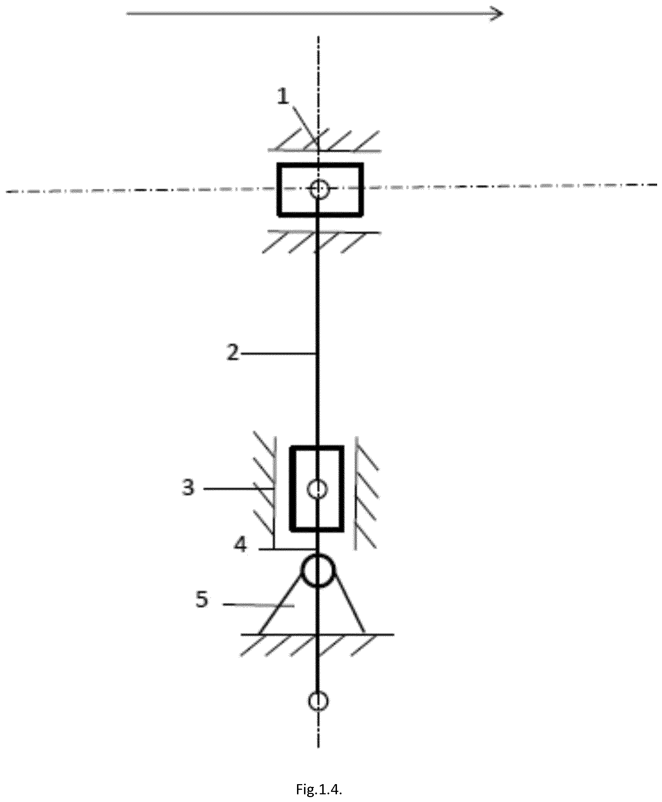

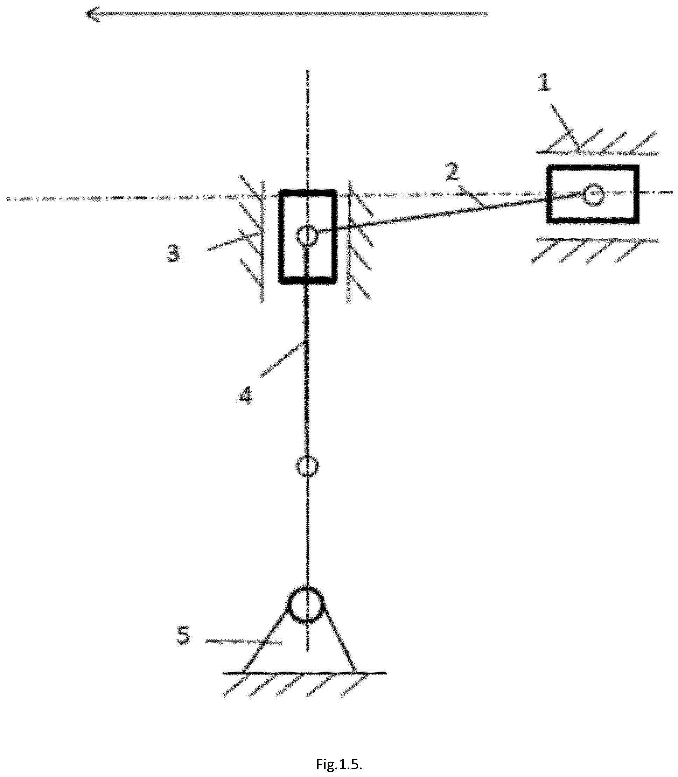

Translational movement of the second slider 1 through the second connecting rod 2 is transferred to translational movement of the first slider 3, which rotates the crank 5 by means of the first connecting rod 4. When the connecting rods 2, 4 and the crank 5 are on the same line, the crank 5 makes one-half revolution (Fig. 1.2, 2.2). Further translational movement of the second slider 1 through the second connecting rod 2 results in reverse movement of the first slider 3, which continues to rotate the crank 5 in initial direction by means of the first connecting rod 4, and at the end point of the second slider 1 stroke the crank 5 makes complete revolution (Fig. 1.3, 2.3). Reverse movement of the second slider 1 through the second connecting rod 2 results in translational movement of the first slider 3, which, by means of the first connecting rod 4, continues to rotate the crank 5 in initial direction, which makes the second half of a revolution being on the same line with the connecting rods 2, 4 (Fig. 1.4, 2.4). When the second slider 1 keeps reverse movement through the second connecting rod 2, it causes reverse movement of the first slider 3, which finalizes revolution of the crank 5 by means of the first connecting rod 4 (Fig. 1.5, 2.5).

Thus, in one cycle of reciprocating movement of the second slider 1, the first slider 3 makes two cycles of reciprocating movements and the crank 5 makes two complete revolutions.

## Claims

1. A two-slider crank mechanism with a segment comprising a first slider (3), a second slider (1), a first connecting rod (4), a second connecting rod (2) and a crank (5) connected with the first slider (3) by means of the first connecting rod (4), **characterized in that** the second slider guide is arranged at an angle to the first slider guide, wherein the second connecting rod (2) is connected with the first slider (3) at one end and with the second slider (1) at the other end, and wherein the second connecting rod (2) length equals to amount of the crank (5) double length and a distance between a connection point of the second connecting rod (2) and the first slider (3) at the initial phase of its movement, measured in the direction of the first slider (3) movement, and a longitudinal axis of the second slider (1).

## Patentansprüche

1. Doppelschieber-Kurbelmechanismus mit einem Glied, das den ersten Schieber (3), den zweiten Schieber (1), die erste Kurbelstange (4), die zweite Kurbelstange (2) und eine Kurbel (5) enthält, die mit dem ersten Schieber (3) mit Hilfe der ersten Kurbelstange (4) verbunden ist, **dadurch gekennzeichnet, dass** sich die Führung des zweiten Schiebers zur Führung des ersten Schiebers in einem Winkel befindet, wobei die zweite Kurbelstange (2) mit dem ersten Schieber (3) an einem Ende und mit dem zweiten Schieber (1) am anderen Ende verbunden ist, und dabei ist die Länge der zweiten Kurbelstange (2) der Summe aus der doppelten Länge der Kurbel (5) und des Abstands zwischen dem Verbindungspunkt der zweiten Kurbelstange (2) und des ersten Schiebers (3) in der Anfangsphase ihrer Bewegung, das in der Bewegungsrichtung des ersten Schiebers (3) gemessen ist, und der Längsachse des zweiten Schiebers (1), gleich.

## Revendications

1. Le mécanisme à manivelle et deux coulisseaux comprend une manivelle contenant le premier coulisseau (3), le deuxième coulisseau (1), la première bielle (4), la deuxième bielle (2) et la manivelle (5) reliée par une première bielle (4) au premier coulisseau (3) et se distingue par un deuxième coulisseau dont le guide de déplacement est disposé à un angle par rapport au guide de déplacement du premier coulisseau, une deuxième bielle (2) reliée par une extrémité au premier coulisseau (3) et par son autre extrémité au deuxième coulisseau (1), la longueur de la deuxième bielle (2) étant égale à la somme du double de la longueur de la manivelle (5) et de la distance entre le point de connexion de la deuxième bielle (2) avec le premier coulisseau (3) à la phase initiale de son mouvement mesuré dans le sens du mouvement du premier coulisseau (3) et l'axe longitudinal du deuxième coulisseau (1).
